# EUROPEAN PATENT APPLICATION

(11) **EP 1 919 186 A1**
(43) Date of publication of application: **07.05.2008**
(21) Application number: 07117422.1
(22) Date of filing: 27.09.2007
(51) Int. Cl.: H04N 1/409

(54) **Scanning device and shading correction method thereof**

(30) Priority: 31.10.2006 KR 20060106953
(71) Applicant: SAMSUNG ELECTRONICS CO., LTD., Suwon-si, Gyeonggi-do (KR)
(72) Inventor: Lee, Jae-kyu Hanshin Jamsil Core Apt. 901, Seoul (KR)
(74) Representative: Brandon, Paul Laurence

(57) **Abstract**

A scanning device (100) includes a display part (120), a flat bed (130) on which a manuscript is loaded, a white reference sheet provided at one side of the flat bed, a scanning head (140) to divide the white reference sheet into a plurality of lines and to obtain shading data corresponding to the plurality of lines by scanning the plurality of lines, a storage part (160) in which the shading data for the plurality of lines is stored, and a controller (180) to calculate a maximum value and a minimum value of the shading data by comparing the shading data of each pixel at a position in the scanning head from the plurality of lines, and to control the display part to display an error message if a difference between the maximum value and the minimum value of the shading data is out of a reference range.

## Description

### BACKGROUND OF THE INVENTION

### 1. Field of the Invention

The present general inventive concept relates to scanning devices, and shading correction methods thereof.

### 2. Description of the Related Art

A conventional scanning device creates image data by scanning an image of a manuscript and visualizes the created image data on a copy paper. The scanning device includes functions of a printer, a scanner, a fax machine, a copying machine, an MFP (Multi Function Peripheral) having above functions, etc.

The conventional scanning device includes a stage glass on which a manuscript is loaded and a scanning head which reads the image of the manuscript while making a round trip to a lower end part of the stage glass. The scanning head includes a light source module for emitting light to the manuscript and an image sensor for sensing and converting the light reflected from the manuscript into an electrical image signal. The image sensor may be embodied by a charge coupled device (CCD) or a contact image sensor (CIS).

In the conventional scanning device, an image signal generated in the image sensor is distorted due to dispersion or irregularity of the quantity of light that is emitted from the light source module, which is called a shading effect. This effect may result in an image signal of a different form from an actual image of the manuscript. Accordingly, there is a need to correct the shading effect which occurs in the image signal.

In a typical shading correction method, reference shading data obtained by scanning a white reference sheet prepared in one side of a flat bed before scanning a manuscript is compared to an image signal obtained by scanning the manuscript. Accordingly, a shading correction is made by determining a black or white pixel based on a result of the comparison. However, if foreign substances adhere to the white reference sheet, an image sensor, etc., the shading correction may not be properly made during the process of scanning, which may result in deterioration of scanning quality.

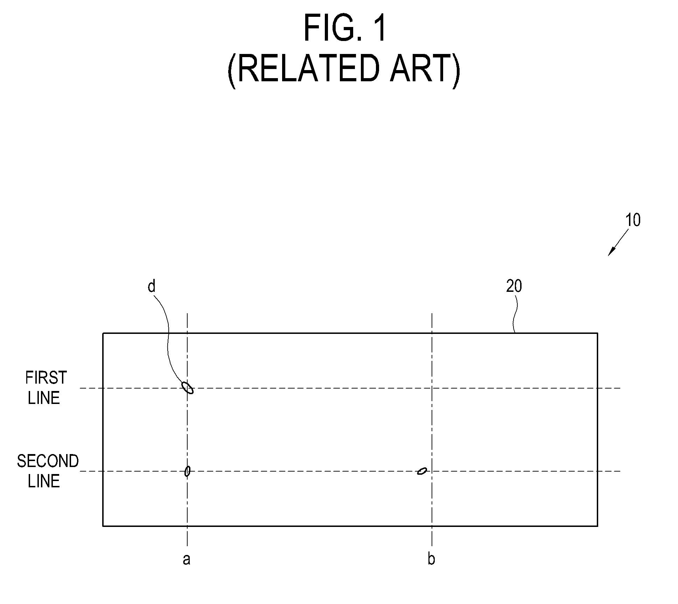

Korean Patent Application No. 2004-0082446 discloses a method of correcting shading data when foreign substances adhere to a white reference sheet or when the foreign substances are present on an optical path of an image sensor. In the disclosed shading data correction method, a white reference sheet 20 is divided by two line areas, that is, first and second lines, for correcting the shading data, as illustrated in FIG. 1, shading data (as denoted by reference letter "d" in FIG. 1) obtained from the two line areas are compared to each other for each of pixels a and b, and one having the larger value of the two shading data is set as reference shading data.

However, as illustrated in FIG. 1, for example, if foreign substances on the first line and the second line are aligned along a path of the scanning pixel 'a,' it is difficult to detect the foreign substances exactly, and in this case, the shading data set to have the larger value does not represent the correct shading data, which results in deterioration of scanning quality.

### SUMMARY OF THE INVENTION

Preferred embodiments of the present invent aim to provide a scanning device which is capable of improving quality of a scanned image by determining exactly whether foreign substances adhere to a white reference sheet, and a shading correction method thereof.

Preferred embodiments of the present invention also aim to provide a scanning device which is capable of detecting a location of a foreign substance that adheres to a white reference sheet and informing a user of the detected position, and a shading correction method thereof.

Additional aspects and utilities of the present general inventive concept will be set forth in part in the description which follows and, in part, will be obvious from the description, or may be learned by practice of the present general inventive concept.

The present general inventive concept provides a scanning device comprising a flat bed on which a manuscript is loaded, a white reference sheet provided at one side of the flat bed, a scanning head to divide the white reference sheet into a plurality of lines and obtains shading data for the plurality of lines by scanning the plurality of lines, a storage part in which the shading data corresponding to the plurality of lines is stored, and a controller to calculate a maximum value and a minimum value of the shading data by comparing the shading data from the plurality of lines of each pixel at a same position in each of the plurality of lines in the scanning head, and to display an error message if a difference between the maximum value and the minimum value of the shading data is out of a reference range.

The scanning device may further comprise a display part to display the error message.

The error message may indicate that a foreign substance exists on the white reference sheet.

The error message may indicate a position at which the foreign substance exists on the white reference sheet.

The controller may store the maximum value of the shading data as reference shading data in the storage part.

The scanning head may obtain the shading data for the plurality of lines multiple times.

The controller may compare a maximum value and a minimum value from average values of the shading data obtained during each of the multiple times.

The present general inventive concept also provides a shading data correction method of a scanning device, comprising dividing a white reference sheet into a plurality of lines and obtaining shading data corresponding to the plurality of lines by scanning the plurality of lines, comparing the shading data of each pixel at a same position with respect to the plurality of lines, calculating a maximum value and a minimum value of the shading data corresponding to the plurality of lines of each pixel, and displaying an error message if a difference between the maximum value and the minimum value of the shading data is out of a reference range.

The shading data correction may method further comprise storing the maximum value of the shading data as reference shading data in a storage part if the difference between the maximum value and the minimum value of the shading data is out of the reference range.

The plurality of lines may be scanned plural times, and a maximum value and a minimum value of an average value of the obtained shading data corresponding to the plurality of lines may be compared with each other.

The shading data correction method may further comprise displaying a position at which a foreign substance exists on the white reference sheet.

The present general inventive concept also provides a shading data correction method of a scanning device, the method comprising dividing a white reference sheet into a plurality of lines, scanning the plurality of lines to obtain shading data corresponding to the plurality of lines, comparing the shading data of each pixel at a same position with respect to the plurality of lines, and generating an error message if a difference between a maximum value and a minimum value of the shading data is not in a range of the preset reference values.

The method may further comprise determining whether a foreign substance exists on the white reference sheet.

The method may further comprise comparing the difference to the range of the preset reference values to find a position at which the foreign substance is located on the white reference sheet.

The method may further comprise displaying a position at which a foreign substance is located on the white reference sheet if the difference is not in the range of the preset reference values.

The present general inventive concept also provides an image forming apparatus, comprising a feeding part to feed a printing medium, an image forming part to form an image corresponding to image data on the printing medium, and a scanning part, comprising a flat bed on which a manuscript is loaded, a white reference sheet provided at one side of the flat bed, a scanning head to divide the white reference sheet into a plurality of lines, to obtain shading data corresponding to the plurality of lines by scanning the plurality of lines, and to generate the image data corresponding to the manuscript, a storage part in which the shading data corresponding to the plurality of lines is stored, and a controller to calculate a maximum value and a minimum value of the shading data by comparing the shading data from the plurality of lines of each pixel at a same position in the scanning head and to display an error message if a difference the maximum value and the minimum value of the shading date is out of a reference range.

### BRIEF DESCRIPTION OF THE DRAWINGS

For a better understanding of the invention, and to show how embodiments of the same may be carried into effect, reference will now be made, by way of example, to the accompanying diagrammatic drawings in which:

FIG. 1 is an exemplary view illustrating a process of obtaining shading data in a conventional shading correction method;

FIG. 2 is a block diagram illustrating a configuration of a scanning device according to an exemplary embodiment of the present general inventive concept;

FIG. 3 is an exemplary view illustrating a shading data obtaining process of a scanning head illustrating in FIG. 2;

FIG. 4 is an exemplary view illustrating shading data obtained at the scanning head;

FIG. 5 is a flow chart illustrating a shading data correcting process of the scanning device according to an exemplary embodiment of the present general inventive concept; and

FIG. 6 is a view illustrating an image forming apparatus according to an exemplary embodiment of the present general inventive concept.

### DETAILED DESCRIPTION OF THE PREFERRED EMBODIMENTS

Reference will now be made in detail to the embodiments of the present general inventive concept, examples of which are illustrated in the accompanying drawings, wherein like reference numerals refer to the like elements throughout. The embodiments are described below so as to explain the present general inventive concept by referring to the figures.

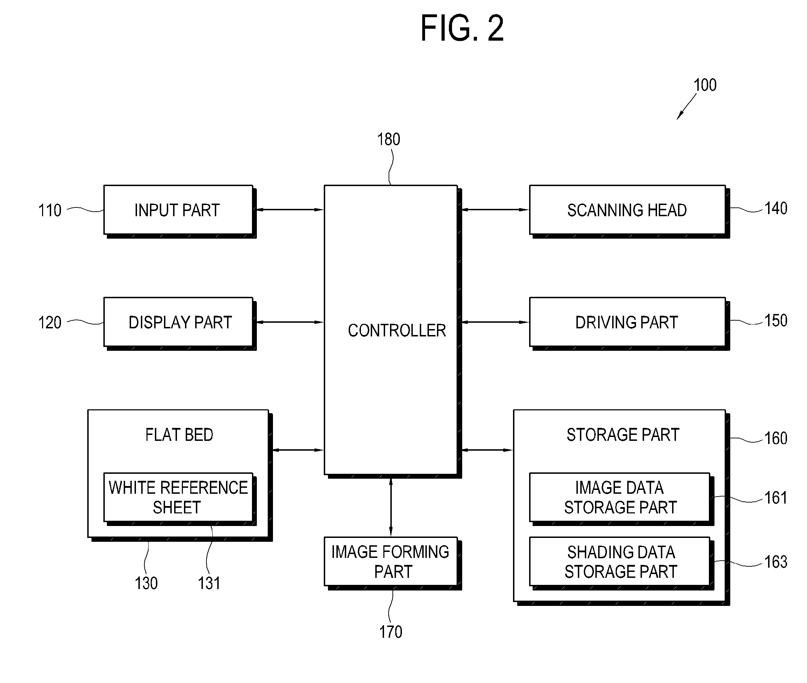

FIG. 2 is a schematic block diagram illustrating a configuration of a scanning device 100 according to an exemplary embodiment of the present general inventive concept.

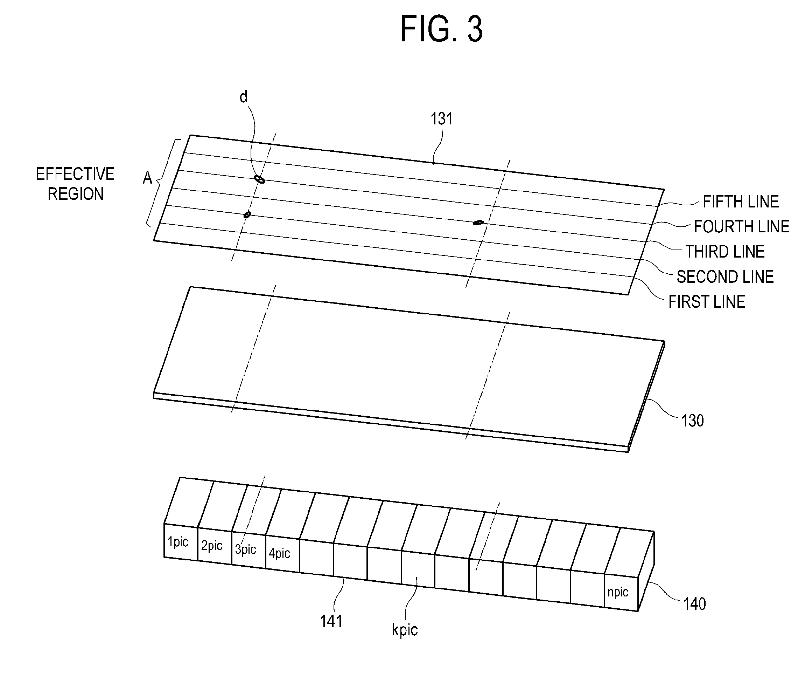

As illustrated in FIG. 2, the scanning device 100 comprises an input part 110 through which a scanning signal is input, a display part 120 to display an operating process of the scanning device 100, a flat bed 130 on which a manuscript is loaded, a scanning head 140 to scan a white reference sheet 131 and the manuscript while moving in a lower side of the flat bed 130, a storage part 160 in which shading data (as denoted by reference letter "d" in FIG. 3) and image data generated by the scanning head 140 are stored, and a controller 180 to compare the shading data of each line obtained by pixels in the scanning head 140, to calculate a maximum value and a minimum value of the shading data based on a result of the comparison, and to set reference shading data based on a difference between the maximum value and the minimum value.

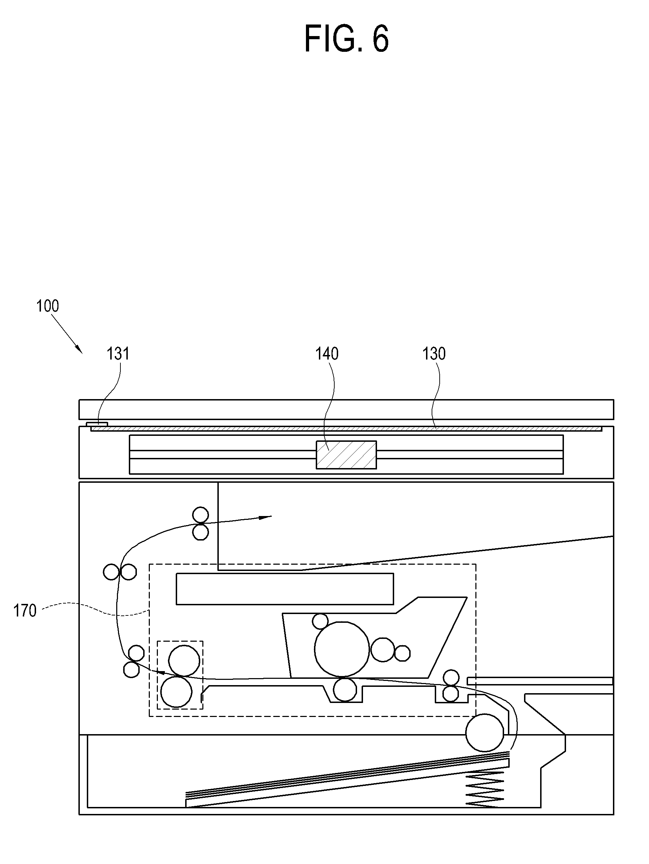

The input part 110 is input with the scanning signal from a user. The input part 110 is provided at the outside of the scanning device 100 and transmits the scanning signal, which is input from the user, to the controller 180. If the scanning device 100 includes an image forming part 170, as illustrated in FIG. 6, the input part 110 may also be input with an output signal.

The display part 120 displays an operation state of the scanning device 100 according to a control signal from the controller 180. Also, the display part 120 displays an error message indicating that a foreign substance has adhered to a white reference sheet 131, as illustrated in FIG. 3, according to a control signal from the controller 180. Also, the display part 120 may display a position at which the foreign substance adheres to the white reference sheet 131 using a coordinate value or other position information display methods. The display part 120 may comprise a liquid crystal panel on which text or an image can be displayed.

The flat bed 130 in which the manuscript is loaded is made of a transparent glass material through which light emitted from a light source module (not illustrated) can be transmitted. The white reference sheet 131 is prepared to provide the reference shading data at one side of the flat bed 130. The white reference sheet 131 has a predetermined length to form an effective area (i.e., effective region) A as illustrated in FIG. 3, and the scanning head 140 obtains the shading data while scanning the white reference sheet 131. In the present embodiment, the white reference sheet 131 may be prepared at one end portion of the flat bed 130, which corresponds to a groove position of the scanning head 140, or at a cover (not illustrated) that covers the flat bed 130. If the foreign substance adheres to the white reference sheet 131, the white reference sheet 131 is prepared in such a manner that a user can detach the white reference sheet 131 from the cover (not illustrated) and remove the foreign substance from the white reference sheet 131. Since a structure and shape of the flat bed 130 is known in the art, detailed explanation thereof is omitted herein.

The scanning head 140 divides the white reference sheet 131 into a plurality of lines and obtains the shading data corresponding to each line. The scanning head 140 generates image data by scanning the manuscript loaded on the flat bed 130. The scanning head 140 comprises the light source module (not illustrated) to irradiate light on the manuscript, a photoelectric converting part (not illustrated) to convert reflected light from one part of the manuscript into an image signal, and an analog to digital converting part (not illustrated) to convert the image data into a digital image signal. The scanning head 140 makes a round trip from a lower side of the flat bed 130 by means of a driving part 150 that is driven according to a control signal from the controller 180.

In the present embodiment, as described above, the scanning head 140 divides the white reference sheet 131 into the plurality of lines, as illustrated in FIG. 3, and obtains shading data corresponding to the lines while moving across the lines by means of the driving part 150, according to a control signal from the controller 180. In the present exemplary embodiment, the scanning head 140 repeatedly scans one line several times to increase reliability of the shading data, and stores an average value of the shading data obtained by the repetitive scanning in the storage part 160. In the present embodiment, a number of scanning times corresponding to each line may be input by the user or may be initially set as a default. Typically, the number of scanning times may be set to be a number ranging from four to six.

In the present exemplary embodiment, the scanning head 140 may obtain more reliable shading data by decreasing an interval between the lines that divide the white reference sheet 131. The interval between the lines is determined depending on a distance by which the driving part 150 moves the scanning head 140, according to a control signal from the controller 180.

The scanning head 140 calculates average values of the shading data obtained by the repetitive scanning corresponding to each line, sorts the calculated average values by the pixels prepared to correspond to a number of image sensors (not illustrated), and stores the sorted average values in the storage part 160.

The driving part 150 is typically embodied by a motor, and comprises a belt combined with the scanning head 140, a driving pulley (not illustrated) to move the belt, and a driven pulley (not illustrated) to rotate according to a driving of the driving pulley. The driving part 150 moves the scanning head 140 by a predetermined interval according to a control signal from the controller 180, to allow the scanning head 140 to obtain the shading data by scanning the white reference sheet 131.

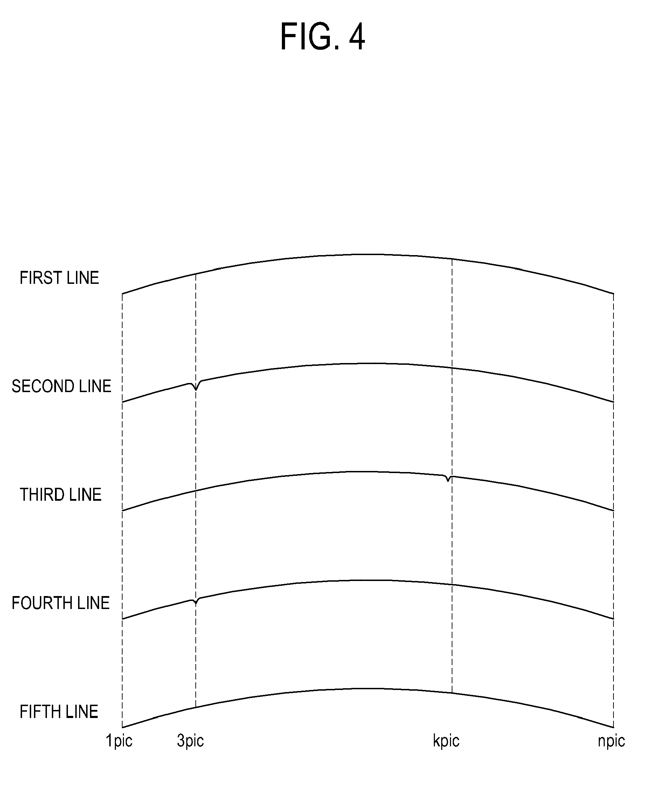

The storage part 160 comprises an image data storage part 161 in which the image data generated in the scanning head 140 is stored, and a shading data storage part 163 in which the shading data obtained by scanning the white reference sheet 131 is stored. In the shading data storage part 163, the shading data corresponding to each line obtained from the white reference sheet 131 is stored as illustrated in FIG. 4. In addition, in the shading data storage part 163, the reference shading data set by the controller 180 based on the shading data is stored.

In the present exemplary embodiment, in the shading data storage part 163, an average value of shading data obtained from each line is stored to correspond to each pixel. If a line on the white reference sheet 131 includes a foreign substance, a value of shading data in a region having the foreign substance is different from a value of shading data in a region having no foreign substance.

Image data received from a host device (not illustrating) through a communication part (not illustrated) or the image data generated by the scanning head 140 is stored in the image data storage part 161.

The controller 180 compares the average values of the shading data corresponding to each line stored in the storage part 160 sorted by each pixel, and calculates a maximum value and a minimum value of each pixel's shading data. For example, as illustrated in FIG. 4, assuming average values of the shading data corresponding to five lines are stored in the shading data storage part 163, the average values of the shading data of the first pixel 1pic of each of the lines are compared with each other. Based on a result of the comparison, the controller 180 calculates the maximum value and the minimum value of the shading data of the first pixel 1pic for five lines. Accordingly, the controller 180 calculates the maximum value and the minimum value of the shading data corresponding to all of the pixels.

The controller 180 calculates a difference between the maximum value and the minimum value of the shading data calculated each pixel, and compares the difference with a reference range. The reference range is obtained based on repeated experiments during production of the scanning device 100. The reference range sets reference shading data by the difference between the maximum value and the minimum value of the shading data, and compares qualities of the image data of the manuscript created by the scanning head 140 corresponding to each of the set reference shading data. In addition, based on a result of the comparison between the qualities of the image data of the created manuscript, the controller 180 sets a range of the difference between the maximum value and the minimum value of the shading data which produces good scanning quality, as the reference range.

The controller 180 compares the maximum value with the minimum value corresponding to each pixel, and compares the difference between the maximum value and the minimum value with the reference range. If the difference is out of the reference range, the controller 180 determines that a foreign substance has adhered to the white reference sheet 131, and controls the display part 120 to display an error message.

In contrast, the controller 180 may detect position and size of a foreign substance existing on the white reference sheet 131 based on the maximum value and the minimum value of the shading data calculated corresponding to each pixel. That is, since the scanning head 140 divides an effective region of the white reference sheet 131 into areas having the same interval and scans the areas, the shading data stored in the shading data storage part 163 corresponds to the whole white reference sheet 131. Particularly, as a moving interval of the scanning head 140 becomes narrower, an ability to detect the foreign substance increases. The controller 180 may calculate a coordinate value of the position at which the foreign substance exists on the white reference sheet 131 based on the value of the shading data of pixels included in each line.

Accordingly, when the error message is displayed, the controller 180 may inform a user of information on the position of the region where the foreign substance exists on the white reference sheet 131 by the coordinate value of the position or approximate information on the position. Accordingly, the user may conveniently remove the foreign substance existing on the white reference sheet 131 without difficulty.

In contrast, if the difference between the maximum value and the minimum value of the shading data is out of the reference range, the controller 180 stores maximum values of the shading data for the whole pixels as reference shading data in the shading data storage part 163.

Moreover, as illustrated in FIG. 6, the scanning device 100 may further comprise the image forming part 170 to print the scanned image data on a paper. The image forming part 170 may print the image data on the paper using ink, a developing agent, an ink ribbon, etc.

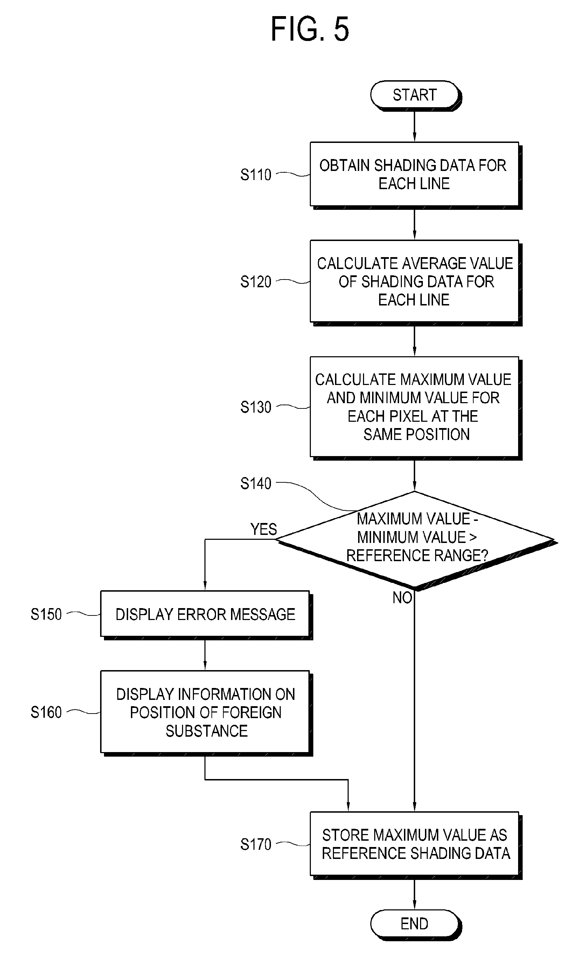

Now, a shading correction method of the scanning device 100 as constructed above will be described with reference to FIGS. 2 through 6.

If a user loads a manuscript on the flat bed 130 and inputs a scanning signal through the input part 110, the scanning head 140 moves to obtain shading data by scanning the white reference sheet 131. To maintain description uniformity, it is assumed that the white reference sheet 131 is divided into five lines, as illustrated in FIG.3.

The scanning head 140 obtains the shading data corresponding to each line while moving from the lower side of the flat bed 130 covering the first line to the fifth line. Accordingly, the scanning head 140 obtains the shading data while repeatedly moving four to six times per line in operation S110. In operation S120, the controller 180 calculates the average value of the shading data corresponding to each line obtained several times, and stores the calculated average value in the storage part 160. Accordingly, the shading data corresponding to each line is stored by each pixel corresponding to an image sensor 141 of the scanning head 140.

The controller 180 calculates the maximum value and the minimum value of the shading data of each pixel having the same position obtained from the first to fifth lines in operation S130. For example, if a foreign substance exists on third pixels 3pic of the second and fourth lines of the white reference sheet 131, as illustrated in FIG. 3, the average value of the shading date corresponding to each line is as illustrated in FIG. 4. The values of the shading data at the position of the third pixel 3pic of the second and fourth lines on which the foreign substance exists are lower than values of the shading data at other positions. As a difference between the values of the shading data at the position of the third pixel and the values of the shading data at other positions become larger, it may be determined that the foreign substance has a larger effect on scanning quality.

In contrast, the controller 180 calculates the difference between the maximum value and the minimum value of the shading data calculated to correspond to each pixel, and determines whether the difference is out of the reference range in operation S140. For example, since the first pixel has the same value at the five lines, the difference between the maximum value and the minimum value becomes zero(0). In contrast, since the third pixel has the minimum value at the second line, the difference between the maximum value and the minimum value at the second line and other lines is out of the reference range. Similarly, the controller 180 calculates the maximum value and the minimum value of the shading data from the first pixel to the n-th pixel, and determines whether the difference therebetween is out of the reference range.

If it is determined that the difference is out of the reference range, the controller 180 controls the display part 120 to display an error message in operation S150, and display a coordinate value or approximate information on positions, such as left upper portion, right lower portion, etc., of the foreign substance in operation S160, so that a user is informed that the foreign substance exist on the third pixel of the second and fourth lines and a k-th pixel of the third line, for example.

Next, the controller 180 stores the maximum value of the shading data calculated to correspond to each pixel, as the reference shading data, in the storage part 160 in operation S170. The scanning head 140 compares the obtained image data by scanning the manuscript, stores the stored shading data, corrects black and white colors based on a result of the comparison, and generates final image data on which the corrected black and white colors are reflected.

Accordingly, if the scanning device 100 comprises the image forming part 170, the image data generated in the scanning head 140 may be visualized on a print paper according to an instruction from the user.

As described above, since a scanning device obtains shading data corresponding to whole areas by dividing a white reference sheet into a plurality of lines, a foreign substance can be detected precisely.

Also, reference shading data can be precisely set by comparing a difference between a maximum value and a minimum value of the shading data corresponding to each line with a reference range.

In addition, since a position at which the foreign substance exists on the white reference sheet is correctly detected based on values of the shading data corresponding to each line, and the detected position is displayed on the display part, a user can perceive the position of the foreign substance.

As apparent from the above description, preferred embodiments of the present general inventive concept provides a scanning device which is capable of detecting a location of a foreign substance that adheres to a white reference sheet and informing a user of the detected position, and a shading correction method thereof.

Although a few exemplary embodiments of the present general inventive concept have been shown and described, it will be appreciated by those skilled in the art that changes may be made in these embodiments without departing from the principles and spirit of the general inventive concept, the scope of which is defined in the appended claims and their equivalents.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A scanning device (100), comprising:
a flat bed (130) on which a manuscript is loaded;
a white reference sheet (131) provided at one side of the flat bed;
a scanning head (140) to divide the white reference sheet into a plurality of lines and to obtain shading data corresponding to the plurality of lines by scanning the plurality of lines;
a storage part (160) in which the shading data corresponding to the plurality of lines is stored; and
a controller (180) to calculate a maximum value and a minimum value of the shading data from the plurality of lines by comparing the shading data of each pixel at a position in each of the plurality of lines in the scanning head, and to display an error message if a difference between the maximum value and the minimum value of the shading data is out of a reference range.

2. The scanning device (100) according to claim 1, further comprising:
a display part (120) to display the error message.

3. The scanning device (100) according to claim 2, wherein the error message indicates that a foreign substance exists on the white reference sheet (131).

4. The scanning device (100) according to claim 3, wherein the error message indicates a position at which the foreign substance exists on the white reference sheet (131).

5. The scanning device (100) according to any preceding claim, wherein the controller (180) stores the maximum value of the shading data as reference shading data in the storage part (160).

6. The scanning device (100) according to any preceding claim, wherein the scanning head (140) obtains the shading data corresponding to the plurality of lines multiple times.

7. The scanning device (100) according to claim 6, wherein the controller (180) compares a maximum value and a minimum value from average values of the shading data obtained during each of the multiple times.

8. A shading data correction method of a scanning device (100), the method comprising:
dividing a white reference sheet (131) into a plurality of lines and obtaining shading data corresponding to the plurality of lines by scanning the plurality of lines;
comparing the shading data of each pixel at a position with respect to the plurality of lines;
calculating a maximum value and a minimum value of the shading data corresponding to the plurality of lines of each pixel; and
displaying an error message if a difference between the maximum value and the minimum value of the shading data is out of a reference range.

9. The shading data correction method according to claim 8, further comprising:
storing the maximum value of the shading data as reference shading data in a storage part (160) if the difference between the maximum value and the minimum value of the shading data is out of the reference range.

10. The shading data correction method according to claim 8 or claim 9, wherein the plurality of lines is scanned multiple times, and a maximum value and a minimum value from average values of the obtained shading data corresponding to the plurality of lines are compared with each other.

11. The shading data correction method according to any one of claims 8-10, further comprising:
displaying a position at which a foreign substance exists on the white reference sheet (131).

12. A shading data correction method of a scanning device (130), the method comprising:
dividing a white reference sheet (131) into a plurality of lines;
scanning the plurality of lines to obtain shading data corresponding to the plurality of lines;
comparing the shading data of each pixel at a position with respect to the plurality of lines; and
generating an error message if a difference between a maximum value and a minimum value of the shading data is not in a range of the preset reference values.

13. The method of claim 12, further comprising:
determining whether a foreign substance exists on the white reference sheet (131).

14. The method of claim 13, further comprising:
comparing the difference to the range of the preset reference values to find a position at which the foreign substance is located on the white reference sheet (131).

15. The method of claim 14, further comprising:
displaying a position at which a foreign substance is located on the white reference sheet (131) if the difference is not in the range of the preset reference values.

16. An image forming apparatus (100), comprising; a feeding part to feed a printing medium;
an image forming part (170) to form an image corresponding to image data on the printing medium; and
a scanning part, comprising:
a flat bed (130) on which a manuscript is loaded,
a white reference sheet (131) provided at one side of the flat bed,
a scanning head (140) to divide the white reference sheet into a plurality of lines, to obtain shading data corresponding to the plurality of lines by scanning the plurality of lines, and to generate the image data corresponding to the manuscript,
a storage part (160) in which the shading data corresponding to the plurality of lines is stored, and
a controller (180) to calculate a maximum value and a minimum value of the shading data by comparing the shading data from the plurality of lines of each pixel at a position in the scanning head and to display an error message if a difference the maximum value and the minimum value of the shading date is out of a reference range.
